# EUROPÄISCHE PATENTSCHRIFT

(11) **EP 0 676 256 B1**
(45) Veröffentlichungstag und Bekanntmachung des Hinweises auf die Patenterteilung: **11.06.1997**
(21) Anmeldenummer: 95104467.6
(22) Anmeldetag: 27.03.1995
(51) Int. Cl.: B23K 9/29, B23K 9/025

(54) **Vorrichtung zum Verschweissen dünner, unter einem feststehenden wassergekühlten Schweisskopf durchlaufender Bleche**
Welding device for thin plates travelling under a stationary water-cooled welding head
Dispositif pour souder des tôles minces se diplaçant sous une tête de soudage fixe refroidie à l'eau

(30) Priorität: 07.04.1994 DE 4411967
(43) Veröffentlichungstag der Anmeldung: 11.10.1995
(73) Patentinhaber: ALCATEL ALSTHOM COMPAGNIE GENERALE D'ELECTRICITE, 75008 Paris (FR)
(72) Erfinder: Staschewski, Harry, Dipl. Ing., D-30853 Langenhagen (DE)

(56) Entgegenhaltungen:
- EP-A- 0 451 072
- AT-A- 385 166
- DE-A- 1 790 101
- GB-A- 1 521 261
- PATENT ABSTRACTS OF JAPAN vol. 009 no. 014 (M-352) ,22.Januar 1985 & JP-A-59 163084 (MITSUBISHI DENKI KK) 14.September 1984,

## Beschreibung

Die Erfindung betrifft eine Vorrichtung zum Verschweißen dünner unter einem feststehenden wassergekühlten Schweißkopf durchlaufender Bleche, insbesondere zum Verschweißen der in Längsrichtung verlaufenden Kanten eines zu einem Rohr geformten Metallbandes unter Schutzgas mit Hilfe einer oder mehrerer nichtabschmelzender in dem Schweißkopf angeordneter Elektroden, bei welcher jede Elektrode mittels einer Elektrodenzange in einem Brennergehäuse eingespannt ist und die Elektrodenzange mittels eines Zangenhalters in dem Brennergehäuse gehalten ist.

Eine derartige Vorrichtung ist aus der DE-A-2256851 bekannt. Die bekannte Vorrichtung besteht aus einem fest installierten. Brennerkopf mit drei Elektroden, die in je einem Elektrodenhalter angeordnet sind. Das zu verschweißende Rohr wird unterhalb des Brennerkopfes entlanggeführt und ein Lichtbogen zwischen jeder Elektrode und dem Rohr erzeugt. Ein Schutzgasschleier umspült den Lichtbogen und die Schweißzone. Bei einer Abnutzung der Elektroden muß der Produktionsprozeß unterbrochen werden. Der Brennerkopf wird aus der Schweißebene herausgeschwenkt und nach einem Lösen der Elektrodenzangen mittels Stellschrauben können die Elektroden nach unten aus den Elektrodenzangen herausgezogen und durch neue Elektroden ersetzt werden. Insbesondere, wenn die Vorrichtung zum Schweißen eines Metallrohres in Verbindung mit einer Vorrichtung zur Herstellung von Kunststoffrohren, d.h. in einer Anlage zur Herstellung von Metall/Kunststoff-Verbundrohren eingesetzt ist, muß das Wechseln der Elektroden in kürzester Zeit durchgeführt werden.

Aus der DE-A-1790101 ist ein Brennerkopf zum Arbeiten mit einem elektrischen Lichtbogen bekannt, welcher aus einem Brennerkopf mit einem Handgriff besteht. Die Zuleitung von Schutzgas und Kühlwasser erfolgt durch den Handgriff. Im Innern des Brennerkopfes ist eine nichtabschmelzende Elektrode vorgesehen, die in ihrem oberen Bereich durch eine rohrförmige Klemmvorrichtung gehalten ist. Das Ende der Klemmvorrichtung wird gegen einen konischen Sitz einer die Klemmvorrichtung umgebenden Hülse gepreßt, wodurch die Elektrode in der Klemmvorrichtung gehalten ist. Nach Lösen einer Halteschraube können durch Wenden des Brennerkopfes die Elektrode, die Klemmvorrichtung, der konische Sitz sowie diverse im Innern des Brenner befindliche Teile, insbesondere die Düse, den Brennerkopf verlassen.

Der vorliegenden Erfindung liegt von daher die Aufgabe zugrunde, die bekannte Vorrichtung zum Schweißen von Metallrohren dahingehend zu verbessern, daß zum einen das Auswechseln der in der Regel aus Wolfram bestehenden Elektroden wesentlich schneller vorgenommen werden kann und zum anderen ein Schwenken des gesamten Schweißbrenners beim Elektrodenwechsel unterbleiben kann.

Diese Aufgabe wird gemäß der Erfindung dadurch gelöst, daß innerhalb einer zentrischen durchgehenden Bohrung in dem Zangenhalter ein rohrförmiger Klemmstab angeordnet ist, in dessen dem Rohr zugewandten Ende, welches geschlitzt ist, die Elektrode klemmend eingesetzt ist.

Durch die erfindungsgemäße Maßnahme kann ohne Schwenken des Schweißbrenners nach dem Lösen der Elektrodenzange die Elektrode nach oben herausgezogen werden.

Unmittelbar nach dem Entfernen der verbrauchten bzw. beschädigten Elektrode wird eine neue Elektrode in den Klemmstab eingesetzt, auf den gewünschten Abstand zum Rohr eingestellt und gemeinsam mit dem Klemmstab in den Schweißbrenner eingesetzt und in der Elektrodenzange fixiert.

Damit das in den Ringspalt zwischen dem Zangenhalter und dem Klemmstab eingespeiste Schutzgas nicht nach oben entweichen kann, ist zumindest eine Ringdichtung vorgesehen, die den Ringspalt an seinem dem Rohr abgekehrten Ende abdichtet.

In Weiterbildung der Erfindung ist vorgesehen, daß an dem dem Rohr abgekehrten Ende des Klemmstabs ein Griff angebracht ist. Dieser Griff erleichtert das Herausziehen und Wiedereinsetzen des Klemmstabes.

Neben den vorher erwähnten Vorteilen besteht noch der erhebliche Vorteil, daß nunmehr die noch heiße Elektrode sofort herausgezogen und ein zweiter mit einer neuen Elektrode bestückter Klemmstab sofort eingesetzt werden kann.

Während das Wechseln und Einrichten der Elektroden mit dem bekannten Brenner bis zu 30 Sekunden dauern konnte, wird der Zeitaufwand hierfür auf 10 Sekunden reduziert.

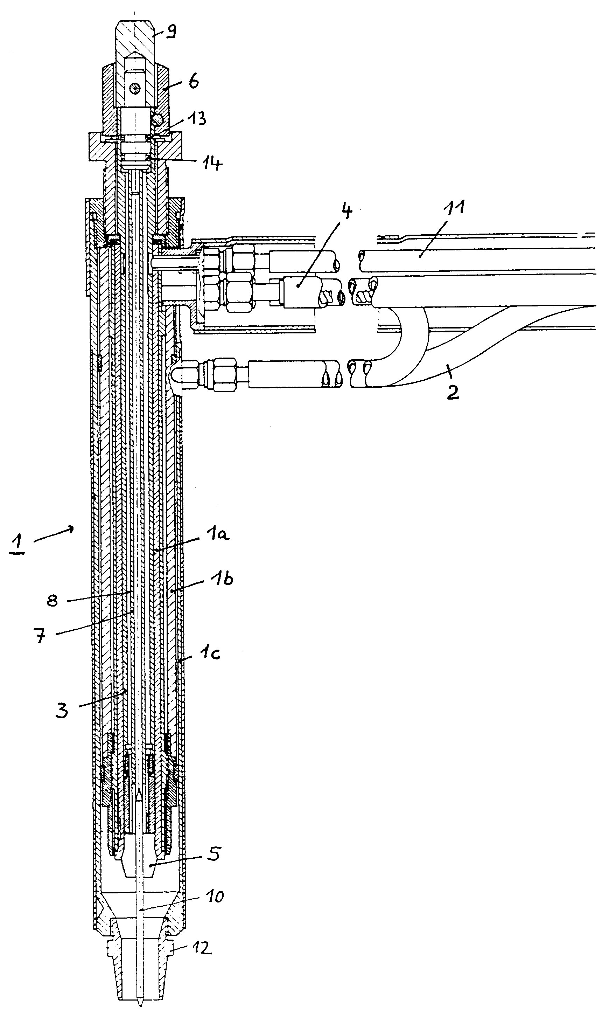

Die Erfindung ist anhand der in der Figur schematisch dargestellten Ausführungsbeispiele näher erläutert.

In der Figur ist ein Schweißbrenner gemäß der Lehre der Erfindung im Schnitt dargestellt.

Der Brenner besteht aus einem Brennergehäuse 1, welches aus einer konzentrischen Anordnung von einem Innenkörper 1a, einem Schutzrohr 1b sowie einem Schutzmantel 1c aufgebaut ist. Zwischen dem Schutzrohr 1b und dem Schutzmantel 1c verbleibt ein nicht näher bezeichneter Ringspalt, in den mittels eines Schlauches 2 Kühlwasser eingeleitet wird.

Im Innern des Brennergehäuses 1 befindet sich ein Zangenhalter 3, der über die Zuleitung 4 mit Strom versorgt wird und an dessen unterem Ende eine Elektodenzange 5 befestigt ist. Der Zangenhalter 3 ist über seine gesamte Länge als Rohr ausgebildet und besitzt an seinem oberen Ende einen Drehknopf 6. Bei Drehung des Drehknopfes 6 wird der Zangenhalter 3 und mit ihm die Elektrodenzange 5 in Längsrichtung des Brennergehäuses 1 verschoben.

In Innern des Zangenhalters 3 ist ein rohrförmiger Klemmstab 7 unter Bildung eines Ringspalts 8 untergebracht, der an seinem oberen Ende einen Griff 9 aufweist. Am unteren Ende ist der Klemmstab 7 geschlitzt und umgreift klemmend die Elektrode 10, üblicherweise eine Wolframelektrode. In den Ringspalt 8 wird mittels einer Zuleitung 11 ein Schutzgas, z.B. Argon eingeleitet, welches am unteren Ende des Schweißbrenners zwischen der Elektrode 10 und einer Schutzgasdüse 12 austritt und einen Schutzgasschleier über der Schweißnaht erzeugt.

Der Ringspalt 8 ist am oberen Ende durch zwei Ringdichtungen 13 und 14 abgedichtet, um zu verhindern, daß Schutzgas nach oben hin austritt.

Während des Betriebes des Brenners liegt die Elektrodenzange 5 eng an der Schräge am unteren Ende des Innenkörpers 1a an und klemmt dadurch die Elektrode 10 fest ein. Ist ein Elektrodenwechsel erforderlich, wird die Elektrodenzange 5 durch Drehen des Drehkopfes 6 gelöst. Die Elektrode 10 kann nun gemeinsam mit dem Klemmstab 7 nach oben herausgezogen werden und umgehend eine neue Elektrode 10, die in das geschlitzte Ende eines zweiten Klemmstabs 7 eingeklemmt ist, gemeinsam mit dem zweiten Klemmstab in den Zangenhalter 3 eingeführt werden. Durch Drehen des Drehknopfes 6 wird die Elektrode 10 in der Elektrodenzange eingespannt. Dieser Vorgang des Elektrodenwechsels kann ohne Schwenken des Schweißbrenners und auch bei noch heißen Elektroden, d.h. unmittelbar nach der Außerbetriebnahme des Schweißbrenners erfolgen.

## Patentansprüche

1. Vorrichtung zum Verschweißen dünner, unter einem feststehenden wassergekühlten Schweißkopf durchlaufender Bleche, insbesondere zum Verschweißen der in Längsrichtung verlaufenden Kanten eines zu einem Rohr geformten Metallbandes unter Schutzgas mit Hilfe einer oder mehrerer nicht abschmelzender in dem Schweißkopf angeordneter Elektroden (10), bei welcher jede Elektrode (10) mittels einer Elektrodenzange (5) in einem Brennergehäuse eingespannt ist und die Elektrodenzange (5) mittels eines Zangenhalters (3) in dem Brennergehäuse gehalten ist, dadurch gekennzeichnet, daß innerhalb einer zentrischen durchgehenden Bohrung in dem Zangenhalter (3) ein rohrförmiger Klemmstab (7) angeordnet ist, in dessen dem Rohr zugewandten Ende, welches geschlitzt ist, die Elektrode (10) klemmend eingesetzt ist.

2. Vorrichtung nach Anspruch 1, dadurch gekennzeichnet, daß in den Ringspalt (8) zwischen dem Zangenhalter (3) und dem Klemmstab (7) das Schutzgas eingespeist ist und der Ringspalt (8) an seinem dem Rohr abgekehrten Ende durch zumindest eine Ringdichtung (13,14) abgedichtet ist.

3. Vorrichtung nach Anspruch 1 oder 2, dadurch gekennzeichnet, daß an dem dem Rohr abgekehrten Ende des Klemmstabs (7) ein Griff (9) angebracht ist.

## Claims

1. Device for welding thin metal sheets passing beneath a fixed, water-cooled welding head, in particular for welding the longitudinally running edges of a metal strip, which has been formed into a pipe, under inert gas with the aid of one or more electrodes (10) which do not melt off and are arranged in the welding head, in which device each electrode (10) is clamped in a torch body by means of electrode tongs (5) and the electrode tongs (5) are held in the torch body by means of a tong holder (3), characterized in that a tubular clamping rod (7), in the end of which facing the pipe, which end is slit, the electrode (10) is inserted in a clamping manner, is arranged inside a central through-bore in the tong holder (3).

2. Device according to Claim 1, characterized in that the inert gas is fed into the annular gap (8) between the tong holder (3) and the clamping rod (7), and the annular gap (8) is sealed at its end remote from the pipe by at least one ring seal (13, 14).

3. Device according to Claim 1 or 2, characterized in that a handle (9) is attached at that end of the clamping rod (7) which is remote from the pipe.

## Revendications

1. Dispositif pour le soudage de tôles minces passant sous une tête de soudage fixe refroidie à l'eau, en particulier pour le soudage des arêtes longitudinales d'une bande métallique pliée en forme de tube, sous gaz protecteur, à l'aide d'une ou de plusieurs électrodes non fusibles (10) placées dans la tête de soudage, chaque électrode (10) étant fixée dans le boîtier du chalumeau au moyen d'une pince porte-électrode (5) et cette dernière étant retenue dans le boîtier du chalumeau par un porte-pince (3), caractérisé par le fait que, à l'intérieur d'une perforation centrée continue, une tige de fixation (7) en forme de tube est placée dans le porte-pince (3), l'électrode (10) étant fixée à l'extrémité fendue de la tige côté tube.

2. Dispositif conformément à la spécification 1, caractérisé par le fait que le gaz protecteur est introduit dans le passage annulaire (8) entre le porte-pince (3) et la tige de fixation (7), et le passage annulaire (8) est étanchéifié à son extrémité côté tube par au moins une bague d'étanchéité (13, 14).

3. Dispositif conformément à la spécification 1 ou la spécification 2, caractérisé par le fait que une poignée (9) est installée à l'extrémité opposée au tube de la tige de fixation (7).
